# EUROPEAN PATENT SPECIFICATION

(11) **EP 0 395 617 B1**
(45) Date of publication and mention of the grant of the patent: **27.07.1994**
(21) Application number: 90870059.4
(22) Date of filing: 23.04.1990
(51) Int. Cl.: B23D 45/10, B27G 19/10, B27B 5/22

(54) **Sawing procedure and sawing mechanism with floating pre-grooving saw that uses such procedure**
Sägeverfahren und Sägeeinrichtung mit vorgeschalteter beweglicher Fuge-Kreissäge, die dieses Verfahren anwendet
Méthode de sciage et machine à scier utilisant cette méthode et comportant une scie mobile de prérainurage

(30) Priority: 28.04.1989 BE 8900469
(43) Date of publication of application: 31.10.1990
(73) Proprietor: MACHINEBOUW CONSTANT PHILIPS N.V., 2670 Puurs (BE)
(72) Inventor: Philips, Constant, B-2670 Puurs (BE)
(74) Representative: Donné, Eddy

(56) References cited:
- EP-A- 0 077 517
- EP-A- 0 181 431
- EP-A- 0 207 482
- EP-A- 0 291 782
- DE-A- 2 851 657

## Description

This invention relates to a sawing mechanism with pre-grooving saw, comprising a machine framework, a saw bench, a main saw protruding above this saw bench and a pre-grooving saw, mounted in one line in front of this main saw, whereby when the product to be sawn and the sawing mechanism are moved one with respect to the other, the pre-grooving saw is in an upward basic position wherein it protrudes a little above the saw bench for sawing a groove in the underside of the product to be sawn.

Sawing mechanisms of this kind may be used for sawing through solid wood, veneer, blockboards, chipboards, hard fabrics, covered chipboards, full core, thermoplastic boards, hard paper boards, mineral boards, plasterboards, rock wool boards, asbestos cement boards, boards in aluminium and light metal alloys and other boards, especially such boards which are postformed with a rounded or profiled form on at least one extremity.

Such mechanisms are used because the groove sawn by the pre-grooving saw in the underside of the product to be sawn avoids splintering or damage to this side by the main saw during the actual sawing through.

A sawing mechanism of this kind is disclosed in EP-A-0 077 517. In this mechanism the main saw as well as the pre-grooving saw are mounted on a carriage moving with respect to the board to be sawn, the pre-grooving saw being in a stationary position with respect to the main saw. If due to the groove sawn in the underside of the board by the pre-grooving saw, splintering of this underside is avoided, there is still a problem of splintering at the formed rear extremity of the board. In order to solve this problem, this known mechanism according to EP-A-0 077 517 comprises a second pre-grooving saw, movably mounted on the carriage in front of the first pre-grooving saw. Before this first pre-grooving saw arrives at the extremity, the second one, having reached this extremity, enters into action, this is saws over this extremity a groove from the underside to the top of the board, following the extremity.

Due amongst others to the two pre-grooving saws, the construction and operation of this mechanism is rather complicated.

The object of the invention is to provide for a sawing mechanism which avoids splintering also at the rear extremity of the product to be sawn, but which is of very simple operation.

For this purpose, the main saw is mounted in a stationary position on the framework, while the pre-grooving saw is attached on an arm which is swingable around a shaft with respect to the framework and can move upwardly from said basic position wherein the pre-grooving saw only protrudes a little above the saw bench, said sawing mechanism comprising a detector for detecting when the rear extremity of the product has arrived above the pre-grooving saw and comprising means for swinging the arm around said shaft with respect to the framework when the detector detects that the extremity has arrived above the pre-grooving saw, in order to move the pre-grooving saw from the basic position upwardly and along with the the passed product, through which the pre-grooving saw extends the groove to the top of the product and the extremity is already at least partially sawn.

In order to show better the characteristics to the present invention, some preferred embodiments are described hereafter, as example without any restrictive character, with reference to the enclosed drawings, in which :
figure 1 shows schematically a sawing mechanism with pre-grooving saw according to the invention;
figure 2, 3 and 4 show different positions of the sawing mechanism according to figure 1;
figure 5 shows schematically a variant of a sawing mechanism with pre-grooving saw according to the invention;
figures 6, 7 and 8 show different positions of the sawing mechanism according to figure 5;
figure 9 shows a side view of a sawing mechanism according to the figures 5, 6, 7 and 8;
figure 10 shows a top view, more especially according to line X-X in figure 9.

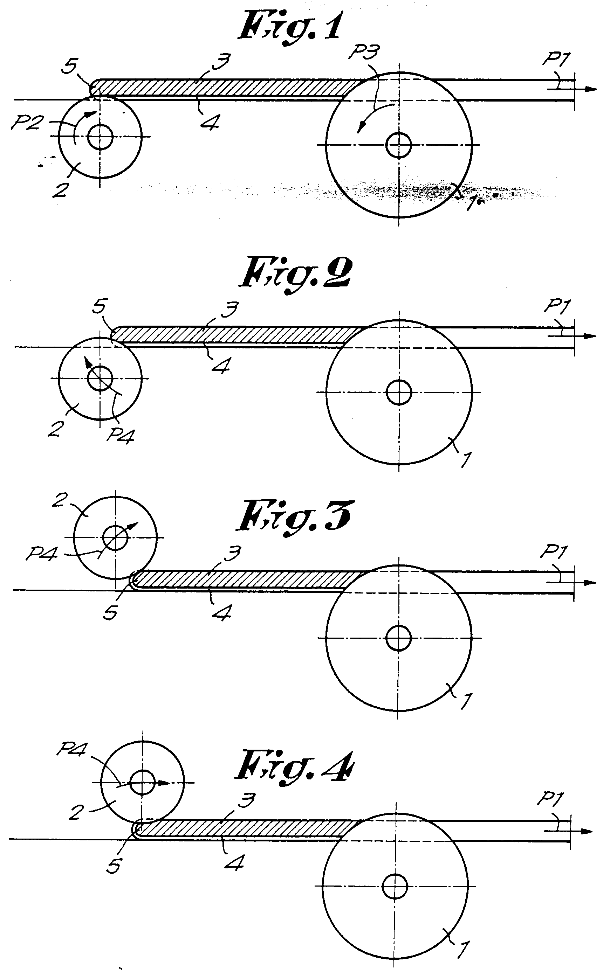

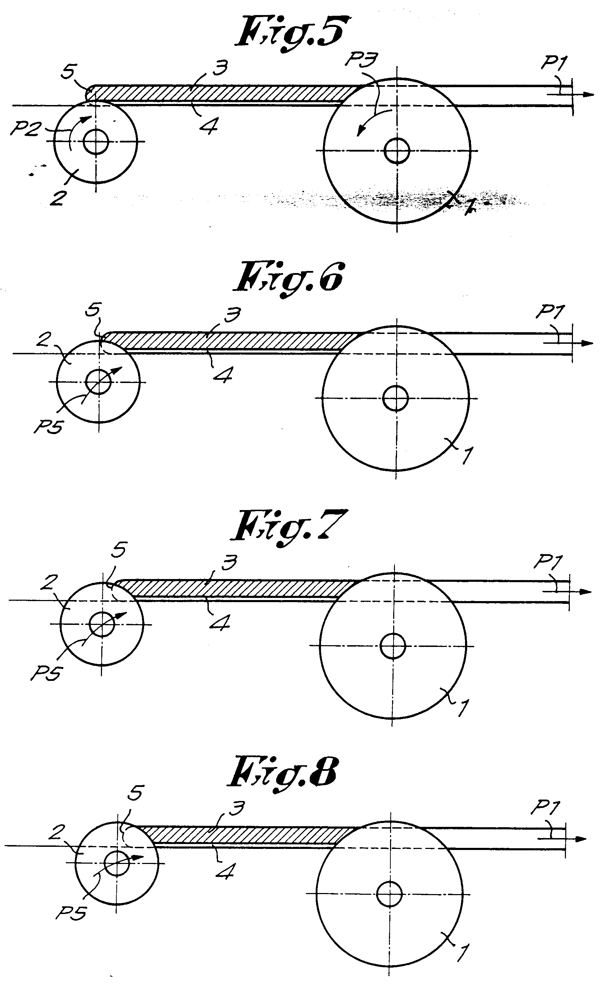

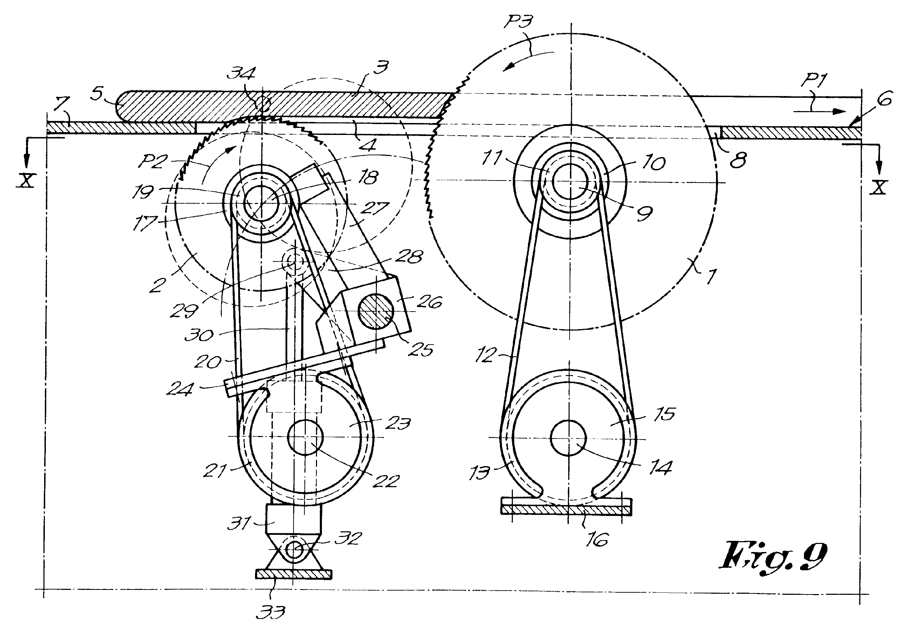

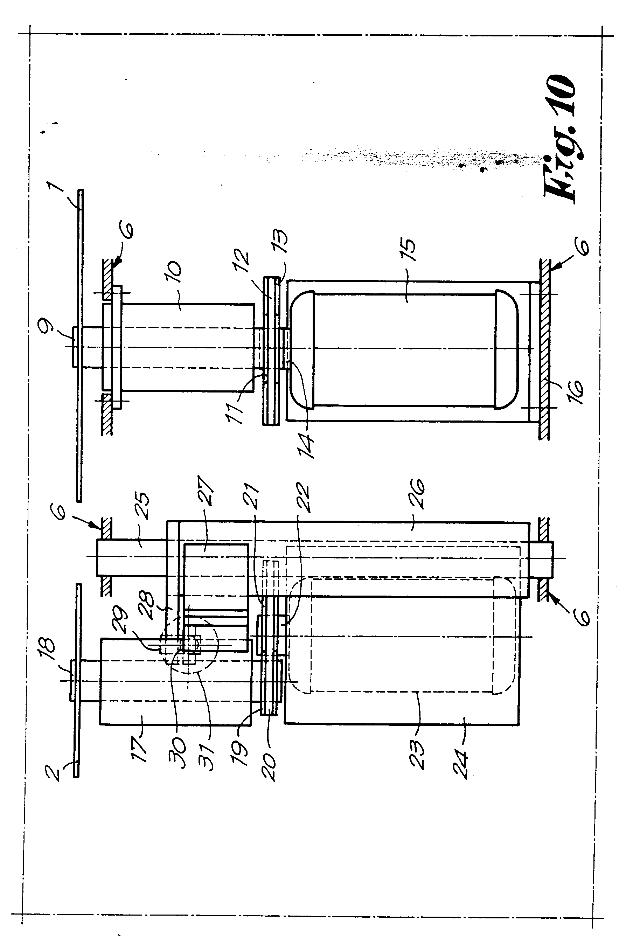

In the figures 1 through 4 four different positions are shown of a sawing mechanism that uses the procedure according to the invention and that in principle consists of a main saw 1 and a so-called pre-grooving saw 2 mounted in front of it in one line both of which are circular saws.

The product 3 to be sawed through, mostly a covered relatively thick board 3, is pushed through the sawing mechanism according to arrow P1 such that the pre-grooving saw 2 first saws a groove 4 in the underside of the board 3 after which the main saw 1 saws through the board 3 at the location of the groove 4.

With this it is of great importance that the pre-grooving saw 2, as shown in the figures, rotates according to arrow P2 while the main saw 1 rotates in the opposite direction, namely according to arrow P3 since the saw teeth cutting into the board 3 effect a sharp incision while the saw teeth of both the main saw 1 and of the pre-grooving saw 2 coming out of the board 3 must always come out of the board 3 via the groove 4 in order to avoid pulling loose or splintering the lower covering.

When the board 3 sliding forward according to arrow P1 passes by the pre-grooving saw with its rear in this case rounded extremity 5, a moving mechanism not shown in the schematic figures 1 through 4 ensures that this pre-grooving saw 2 rotates according to arrows P4 around the extremity 5 of the board 3 such that the pre-grooving saw 2 as it were overtakes the board 3 and extends the groove 4 over the extremity 5 up to the top of the board 3.

Since the pre-grooving saw 2 is moved over the extremity 5 of the board 3 according to arrows P4, the groove 4 also remains equally deep on this extremity 5.

With the further sawing through of the board 3 by means of the main saw, the board 3 will not be damaged on this extremity 5, such that it remains usable on two sides.

A variant of the sawing mechanism described above is shown in the figures 5 through 8 and only differs from the example according to figures 1 through 4 through the fact that the movement of the pre-grooving saw 2 is different. In this case the pre-grooving saw 2 is rotated according to the arrows P5 whereby the pre-grooving saw 2 also overtakes the board 3 but saws much deeper into the extremity 5.

In the figures 9 and 10 a side view and top view are shown of an embodiment of a sawing mechanism that can effect the movement as shown in the figures 5 through 8 and that in principle consists of an only partly shown machine framework 6 that supports a saw bench 7 in which a slit 8 is provided and whereby the pre-grooving saw 2 and the main saw 1 are installed in one line behind each other in the framework 6 such that both extend through the slit 8 up to the desired height above the saw bench 7.

The main saw 1 is attached to a shaft 9 which is mounted on bearings in a body 10 that is fixed onto the framework 6. The shaft 9 is further provided with a belt pulley 11 which is driven by means of a V-belt 12 from a belt pulley 13 which is attached to a shaft 14 of for example an electric motor 15, whereby the latter rests on a support 16 of the framework 6.

The pre-grooving saw 2 is attached to a shaft 18, mounted on bearings in a body 17, which is provided with a belt pulley 19 which is driven by means of a V-belt 20 from a belt pulley 21, whereby the latter is attached to a shaft 22 of for example an electric motor 23.

The motor 23 is attached by means of a connecting element 24 to a housing 26 rotatable around a shaft 25 of the machine framework 6 whereby the body 17 is attached to this housing 26 in this case by means of an arm 27.

Further, to the housing 26 an arm 28 is attached which on its free extremity is attached by means of a pivot 29 to the free extremity of the piston rod 30 of a pneumatic pressure cylinder 31, whereby the free extremity of the body of this pneumatic cylinder 31 is itself hingingly fixed onto a support 33 of the framework 6 by means of a pivot 32.

The pneumatic cylinder 31 is coupled to a control not shown in the figures which among others consists of a photoelectric cell 34 disposed above the saw bench 7, which is more specifically situated in front of the shaft 18 of the pre-grooving saw 2.

The operation of the sawing mechanism described above is very simple and as follows.

When a board 3 to be sawed through is pushed through the sawing mechanism according to arrow P1 whereby this board 3 is normally guided by guides not shown in the drawings on the saw bench 7 or by a framing table also not shown but in itself known, the pre-grooving saw 2 is placed in the position according to figure 9 such that this pre-grooving saw 2 only protrudes a little above the saw bench 7 and because of this saws a groove 4 into the underside of the board 3. Since the pre-grooving saw 2 rotates in the direction according to arrow P2 a sharp straight groove 4 is formed, without the appearance of any fragments breaking off. The main saw 1 will afterwards completely saw through the board 3 at the location of this groove 4 whereby the breaking off of fragments from the underside of the board 3 is totally avoided through the presence of the groove 4.

When the photoelectric cell 34 detects that the rear extremity 5 of the board 3 slides past, the piston rod 30 is pushed out of the pneumatic cylinder 31 such that the housing 26 is rotated around the shaft 25 by means of the arm 28. Both the pre-grooving saw 2 and the motor 23, which are namely both fixed to this housing 26, hereby rotate in the same manner around the shaft 25 such that the V-belt 20 always remains equally tightly stretched. Through the rotation of the pre-grooving saw 2 around the shaft 25 this pre-grooving saw 2 will move upward along with the board 3 through which, as clearly appears from the figures 6 through 8, the groove 4 is extended to the top of the board 3 and the extremity 5 of the board 3 is already partially sawed through.

It is clear that with the implementation of the sawing mechanism described above all sorts of parameters need to be taken into account in order to obtain a correct movement of the pre-grooving saw 2 whereby then for example the length of the arm 27 and the location of the shaft 25 in the machine framework 6 come to mind.

Still further possibilities of movement for the pre-grooving saw 2 can possibly be provided for example by replacing the arm 27 by an arm extendable by means of an additional pneumatic or hydraulic cylinder, which then makes the movements from the figures 1 through 4 possible.

The present invention is in no way restricted to the embodiments described as examples and shown in the drawings, but such sawing mechanism with pre-grooving saw can be implemented in all kinds of forms and dimensions without departing from the scope of the present invention.

## Claims

1. Sawing mechanism with pre-grooving saw, comprising a machine framework (6), a saw bench (7), a main saw (1) protruding above this saw bench (7) and a pre-grooving saw (2), mounted in one line in front of this main saw (1), whereby when the product (3) to be sawn and the sawing mechanism are moved one with respect to the other, the pre-grooving saw (2) is in an upward basic position wherein it protrudes a little above the saw bench (7) for sawing a groove (4) in the underside of the product (3) to be sawn, characterised in that the main saw (1) is mounted in a stationary position on the framework (6), while the pre-grooving saw (2) is attached on an arm (27) which is swingable around a shaft (25) with respect to the framework (6) and can move upwardly from said basic position wherein the pre-grooving saw (2) only protrudes a little above the saw bench (7), said sawing mechanism comprising a detector (34) for detecting when the rear extremity (5) of the product (3) has arrived above the pre-grooving saw (2) and comprising means (30, 31) for swinging the arm (27) around said shaft (25) with respect to the framework (6) when the detector (34) detects that the extremity (5) has arrived above the pre-grooving saw (2), in order to move the pre-grooving saw (2) from the basic position upwardly and along with the the passed product (3), through which the pre-grooving saw (2) extends the groove (4) to the top of the product (3) and the extremity (5) is already at least partially sawn.

2. Sawing mechanism according to the preceding claim, characterised in that the arm (27) is attached to a housing (26) rotatable around the shaft (25).

3. Sawing mechanism according to the preceding claim, characterised in that it comprises an arm (28) installed on the housing (26) and in that the means (30, 31) for swinging the arm (27) comprise a pneumatic cylinder (31) attached itself to the framework (6) by means of a pivot (32), the piston rod (30) of said pneumatic cylinder being attached by means of a pivot (29) to the arm (28).

4. Sawing mechanism according to either one of the preceding claims, characterised in that the shaft (25) is fixed to the framework (6) and stands perpendicular on the pre-grooving saw (2).

5. Sawing mechanism according to either one of the preceding claims, characterised in that the shaft (25) is installed between the pre-grooving saw (2) and the main saw (1) on the framework (6) and in the basic position of the pre-grooving saw (2) is situated lower than the shaft (18) of the pre-grooving saw (2).

6. Sawing mechanism according to either one of the preceding claims, characterised in that the arm (27) is an extendable arm and it comprises means for extending said arm (27).

7. Sawing mechanism according to either one of the preceding claims, characterised in that the detector (34) is a photoelectric cell.

8. Sawing mechanism according to either one of the claims 2 and 3, characterised in that it comprises a motor (23) which like the pre-grooving saw (2) is attached to the housing (26), said motor (23) driving the pre-grooving saw (2).

9. Sawing mechanism according to the preceding claim, characterised in that it comprises a belt (20) between the motor (23) and the pre-grooving saw (2).

10. Sawing mechanism according to either one of the preceding claims, characterised in that the pre-grooving saw (2) is a circular saw which during the sawing so rotates around its shaft (18) that its uppermost teeth move toward the main saw (1).

11. Sawing mechanism according to either one of the preceding claims, characterised in that the main saw (1) is a circular saw which during the sawing so rotates around its shaft (9) that its uppermost teeth move toward the pre-grooving saw (2).

## Patentansprüche

1. Sägevorrichtung mit vorgeschalteter Fugen-Säge, umfassend ein Maschinengestell (6), eine Sägebank (7), eine Hauptsäge (1), die über diese Sägebank (7) hinausragt, und eine vorgeschaltete Fugen-Säge (2), die in einer Linie vor dieser Hauptsäge (1) montiert ist, wobei, wenn das zu sägende Produkt (3) und die Sägevorrichtung in Bezug zueinander bewegt werden, die vorgeschaltete Fugen-Säge (2) sich in einer aufwärtsgerichteten Grundposition befindet, in der sie etwas über die Sägebank (7) hinausragt, um eine Nut (4) in die Unterseite des zu sägenden Produkts (3) zu sägen, dadurch gekennzeichnet, daß die Hauptsäge (1) in einer stationären Position auf dem Gestell (6) montiert ist, während die vorgeschaltete Fugen-Säge (2) an einem Arm (27) befestigt ist, der in Bezug auf das Gestell (6) um eine Welle (25) geschwenkt werden kann und aus besagter Grundposition, in der die vorgeschaltete Fugen-Säge (2) nur etwas über die Sägebank (7) hinausragt, nach oben bewegt werden kann, wobei besagte Sägevorrichtung einen Detektor (34) zum Erfassen der Ankunft des hinteren Endes (5) des Produkts (3) über der vorgeschalteten Fugen-Säge (2) sowie Mittel (30, 31) zum Schwenken des Arms (27) um besagte Welle (25) in Bezug auf das Gestell (6), sobald der Detektor (34) erfaßt, daß das Ende (5) über der vorgeschalteten Fugen-Säge (2) angekommen ist, umfaßt, um die vorgeschaltete Fugen-Säge (2) aus der Grundposition nach oben und entlang dem durchgelassenen Produkt (3) zu bewegen, wodurch die vorgeschaltete Fugen-Säge (2) die Nut (4) bis zur Oberseite des Produkts (3) verlängert und das Ende (5) zumindest teilweise bereits gesägt ist.

2. Sägevorrichtung gemäß dem vorgenannten Anspruch, dadurch gekennzeichnet, daß der Arm (27) an einem um die Welle (25) drehbaren Gehäuse (26) angebracht ist.

3. Sägevorrichtung gemäß dem vorgenannten Anspruch, dadurch gekennzeichnet, daß sie einen am Gehäuse (26) installierten Arm (28) umfaßt, und daß die Mittel (30, 31) zum Schwenken des Arms (27) einen Pneumatikzylinder (31) umfassen, der selbst mittels eines Zapfens (32) am Gestell (6) befestigt ist, wobei die Kolbenstange (30) besagten Pneumatikzylinders mittels eines Zapfens (29) am Arm (28) angebracht ist.

4. Sägevorrichtung gemäß einem der vorgenannten Ansprüche, dadurch gekennzeichnet, daß die Welle (25) am Gestell (6) befestigt ist und senkrecht zur vorgeschalteten Fugen-Säge (2) steht.

5. Sägevorrichtung gemäß einem der vorgenannten Ansprüche, dadurch gekennzeichnet, daß die Welle (25) zwischen der vorgeschalteten Fugen-Säge (2) und der Hauptsäge (1) am Gestell (6) montiert ist und daß die Grundposition der vorgeschalteten Fugen-Säge (2) niedriger gelegen ist als die Welle (18) der vorgeschalteten Fugen-Säge (2).

6. Sägevorrichtung gemäß einem der vorgenannten Ansprüche, dadurch gekennzeichnet, daß der Arm (27) ein ausziehbarer Arm ist und daß sie Mittel zum Verlängern des besagten Arms (27) umfaßt.

7. Sägevorrichtung gemäß einem der vorgenannten Ansprüche, dadurch gekennzeichnet, daß der Detektor (34) eine Fotozelle ist.

8. Sägevorrichtung gemäß einem der Ansprüche 2 und 3, dadurch gekennzeichnet, daß sie einen Motor (23) umfaßt, der wie die vorgeschaltete Fugen-Säge (2) am Gehäuse (26) angebracht ist, wobei besagter Motor (23) die vorgeschaltete Fugen-Säge (2) antreibt.

9. Sägevorrichtung gemäß dem vorgenannten Anspruch, dadurch gekennzeichnet, daß sie einen Riemen (20) zwischen dem Motor (23) und der vorgeschalteten Fugen-Säge (2) enthält.

10. Sägevorrichtung gemäß einem der vorgenannten Ansprüche, dadurch gekennzeichnet, daß die vorgeschaltete Fugen-Säge (2) eine Kreissäge ist, die während des Sägens so um ihre Welle (18) rotiert, daß ihre obersten Zähne sich in Richtung der Hauptsäge (1) bewegen.

11. Sägevorrichtung gemäß einem der vorgenannten Ansprüche, dadurch gekennzeichnet, daß die Hauptsäge (1) eine Kreissäge ist, die während des Sägens so um ihre Welle (9) rotiert, daß ihre obersten Zähne sich in Richtung der vorgeschalteten Fugen-Säge (2) bewegen.

## Revendications

1. Mécanisme de sciage à scie de pré-rainurage, comprenant un bâti de machine (6), un établi pour scie (7), une scie principale (1) faisant saillie au-dessus de cet établi pour scie (7) et une scie de pré-rainurage (2) montée en alignement devant cette scie principale (1), par lequel, lorsque le produit (3) qui doit être scié et le mécanisme de sciage se déplacent l'un par rapport à l'autre, la scie de pré-rainurage (2) se trouve dans une position dressée de base dans laquelle elle fait saillie légèrement au-dessus de l'établi pour scie (7) dans le but de scier une rainure (4) sur le côté inférieur du produit (3) qui doit être scié, caractérisé en ce que la scie principale (1) est montée dans une position stationnaire sur le bâti (6), tandis que la scie de pré-rainurage (2) est fixée sur un bras (27) qui peut pivoter autour d'un arbre (25) par rapport au bâti (6) et qui peut effectuer un mouvement ascendant par rapport à ladite position de base dans laquelle la scie de pré-rainurage (2) ne fait saillie que légèrement au-dessus de l'établi pour scie (7), ledit mécanisme de sciage comprenant un détecteur (34) pour détecter le moment où l'extrémité arrière (5) du produit (3) est arrivée au-dessus de la scie de pré-rainurage (2) et comprenant des moyens (30, 31) pour faire osciller le bras (27) autour dudit arbre (25) par rapport au bâti (6) lorsque le détecteur (34) détecte que l'extrémité (5) est arrivée au-dessus de la scie de pré-rainurage (2) dans le but de déplacer la scie de pré-rainurage (2) depuis la position de base vers le haut et conjointement avec le produit (3) qui est passé, ce qui permet à la scie de pré-rainurage (2) de prolonger la rainure (4) vers le haut du produit (3), l'extrémité (5) étant déjà au moins partiellement sciée.

2. Mécanisme de sciage selon la revendication précédente, caractérisé en ce que le bras (27) est fixé à un logement (26) rotatif autour de l'arbre (25).

3. Mécanisme de sciage selon la revendication précédente, caractérisé en ce qu'il comprend un bras (28) monté sur le logement (26) et en ce que les moyens (30, 31) pour faire osciller le bras (27) comprennent un cylindre pneumatique (31) fixé lui-même au bâti (6) au moyen d'un pivot (32), la tige de piston (30) dudit cylindre pneumatique étant fixée au bras (28) au moyen d'un pivot (29).

4. Mécanisme de sciage selon l'une quelconque des revendications précédentes, caractérisé en ce que l'arbre (25) est fixé au bâti (6) et est dressé perpendiculairement sur la scie de pré-rainurage (2).

5. Mécanisme de sciage selon l'une quelconque des revendications précédentes, caractérisé en ce que l'arbre (25) est monté entre la scie de pré-rainurage (2) et la scie principale (1) sur le bâti (6) et, dans la position de base de la scie de pré-rainurage (2), est situé plus bas que l'arbre (18) de la scie de pré-rainurage (2).

6. Mécanisme de sciage selon l'une quelconque des revendications précédentes, caractérisé en ce que le bras (27) est un bras extensible et en ce qu'il comprend un moyen pour étendre ledit bras (27).

7. Mécanisme de sciage selon l'une quelconque des revendications précédentes, caractérisé en ce que le détecteur (34) est une cellule photo-électrique.

8. Mécanisme de sciage selon l'une quelconque des revendications 2 et 3, caractérisé en ce qu'il comprend un moteur (23) qui, comme la scie de pré-rainurage (2), est fixé au logement (26), ledit moteur (23) entraînant la scie de pré-rainurage (2).

9. Mécanisme de sciage selon la revendication précédente, caractérisé en ce qu'il comprend une courroie (20) entre le moteur (23) et la scie de pré-rainurage (2).

10. Mécanisme de sciage selon l'une quelconque des revendications précédentes, caractérisé en ce que la scie de pré-rainurage (2) est une scie circulaire qui, lors du sciage, tourne autour de son arbre (18) de telle sorte que ses dents les plus supérieures se déplacent en direction de la scie principale (1).

11. Mécanisme de sciage selon l'une quelconque des revendications précédentes, caractérisé en ce que la scie principale (1) est une scie circulaire qui, lors du sciage, tourne autour de son arbre (9) de telle sorte que ses dents les plus supérieures se déplacent en direction de la scie de pré-rainurage (2).
